# EUROPÄISCHE PATENTSCHRIFT

(11) **EP 3 583 584 B1**
(45) Veröffentlichungstag und Bekanntmachung des Hinweises auf die Patenterteilung: **20.01.2021**
(21) Anmeldenummer: 18705894.6
(22) Anmeldetag: 15.02.2018
(51) Int. Cl.: G08C 19/00

(54) **VERFAHREN ZUM BETRIEB EINER SENSORANORDNUNG AUF BASIS EINES DSI-PROTOKOLLS SOWIE EINE ENTSPRECHENDE SENSORANORDNUNG.**
METHOD FOR OPERATING A SENSOR ARRANGEMENT ON THE BASIS OF A DSI PROTOCOL AND A CORRESPONDING SENSOR ARRANGEMENT
PROCÉDÉ DE FONCTIONNEMENT D'UN DISPOSITIF DE DÉTECTION SUR LA BASE D'UN PROTOCOLE DSI ET DISPOSITIF DE DÉTECTION CORRESPONDANT

(30) Priorität: 16.02.2017 DE 102017103117
(43) Veröffentlichungstag der Anmeldung: 25.12.2019
(73) Patentinhaber: Valeo Schalter und Sensoren GmbH, 74321 Bietigheim-Bissingen (DE)
(72) Erfinder: LEWANDOWSKI, Marek, 74321 Bietigheim-Bissingen (DE)
(74) Vertreter: Enge, Sebastian
(86) Internationale Anmeldenummer: PCT/EP2018/053758
(87) Internationale Veröffentlichungsnummer: WO 2018/149908

(56) Entgegenhaltungen:
- US-A1- 2013 070 863

## Beschreibung

### ANWENDUNGSGEBIET UND STAND DER TECHNIK

Die Erfindung betrifft Verfahren zum Betrieb einer Sensoranordnung auf Basis eines DSI-Protokolls in einem Kraftfahrzeug sowie eine Sensoranordnung in einem Kraftfahrzeug, die mittels eines erfindungsgemäßen Verfahrens betrieben wird.

Das DSI-Protokoll (Distributed System Interface, siehe: DSI3 Bus Standard, Revision 1.00 vom 16. Februar 2011), dessen Spezifikation hiermit durch explizite Einbeziehung zum Teil dieser Offenbarung dieser Erfindung gemacht wird, ist ein Protokoll, welches es gestattet, auf Basis sehr einfacher Zweidraht-Verkabelung ein Sensor-Netzwerk aufzubauen, in dem eine Zentralinstanz (Master) mit einer oder mehreren Satelliteninstanzen (Slaves) über einen Bus kommuniziert. Das DSI-Protokoll richtet sich dabei primär auf die Verwendung im Fahrzeug, um mittels der Zentralinstanz eine Mehrzahl von Satelliteninstanzen, insbesondere Sensoren und Aktoren abzufragen und/oder anzusteuern.

Die Spezifikation des DSI-Protokolls sieht dabei vor, dass eine solche Sensoranordnung, umfassend mindestens eine Zentralinstanz und mindestens eine Satelliteninstanz, in einer von zwei Betriebsklassen betrieben werden kann, einerseits der "Signal Function Class", andererseits der "Power Function Class".

Das Protokoll sieht weiterhin grundsätzlich drei unterschiedliche Typen der Nutzung des Busses zwischen der Zentralinstanz und der Satelliteninstanz vor:
Im CRM-Modus (Command and Response Modus) findet eine bidirektionale Kommunikation zwischen der Zentralinstanz und der Satelliteninstanz statt. Die Zentralinstanz sendet ein Kommando (Command), auf das die Satelliteninstanz antwortet (Response). Dies wird beispielsweise verwendet, um die Satelliteninstanzen zu konfigurieren oder um bestimmte Werte gezielt von einer Satelliteninstanz abzufragen.

Im PDCM-Modus (Periodic Data Collection Mode) übertragen die Satelliteninstanzen vergleichsweise große Datenmengen innerhalb eines vorgegebenen Zeitschlitzes an die Zentralinstanz, wobei die Sendetätigkeit der Zentralinstanz sich darauf beschränkt, durch ein Synchronisierungssignal (Broadcast Read Command) den Satelliteninstanzen einen Bezugspunkt zur Bestimmung dieses Zeitschlitzes zur Verfügung zu stellen. Die Satelliteninstanzen sind bereits zuvor mit Informationen zu ihrem jeweiligen Zeitschlitz ausgestattet worden, so dass sie in Reaktion auf das Synchronisierungssignal ihr jeweiliges Sendezeitintervall bestimmen können und auf Basis dessen ihre Sensordaten an die Zentralinstanz senden können.

In der Power-Phase findet die Übertragung von vergleichsweise großen Mengen elektrischer Energie statt, um Satelliteninstanzen mit hohem Energiebedarf mit dieser zu versorgen.

Die eingangs genannte "Signal Function Class" gemäß der oben genannten Spezifikation dient primär der Anbindung von Sensor-Satelliteninstanzen mit geringem Energiebedarf und vergleichsweise hohem Datenaufkommen, welches von der Satelliteninstanz zur Zentralinstanz zu senden ist. Nach Inbetriebnahme einer Sensoranordnung der "Signal Function Class" findet zunächst eine Phase der Kommunikation im CRM-Modus zwischen der Zentralinstanz und der Satelliteninstanz statt, im Rahmen derer die Satelliteninstanz üblicherweise konfiguriert wird, beispielsweise in Hinblick auf die Parameter des oben genannten PDCM-Zeitschlitzes dieser Satelliteninstanz. Ist diese Phase abgeschlossen, so geht die Sensoranordnung in den PCDM-Modus über, in dem immer in Reaktion auf das Synchronisierungssignal der Zentralinstanz die Sensor-Satelliteninstanz oder die Sensor-Satelliteninstanzen die erfassten Daten im jeweils zugeordneten Zeitschlitz an die Zentralinstanz senden. Diese Phase im PDCM-Modus wird üblicherweise nicht mehr verlassen, bis der Betrieb der Sensoranordnung unterbrochen wird. Eine Power-Phase ist gemäß "Signal Function Class" nicht vorgesehen und aufgrund des genannten geringen Energiebedarfs auch nicht erforderlich.

Die genannte "Power Function Class" dient primär der Anbindung von Aktor-Satelliteninstanzen mit vergleichsweise hohem Energiebedarf und vergleichsweise geringem Datenaufkommen, welches von der Zentralinstanz zur Satelliteninstanz zu senden ist. Im Betrieb einer Sensoranordnung der "Power Function Class" finden im Wechsel Phasen der Kommunikation zwischen der Zentralinstanz und der Satelliteninstanz im CRM-Modus sowie Power-Phasen statt. Dabei überwiegen zeitlich üblicherweise die Power-Phasen deutlich. Durch die Speisung der Satelliteninstanzen in diesen Phasen mit vergleichsweise viel Energie bei verglichen mit dem CRM-Modus höherer Spannung können insbesondere Aktoren betrieben werden, wobei dies üblicherweise auf Basis von zuvor in der CRM-Phase von der Zentralinstanz an die Satelliteninstanz übertragenen Steuerbefehlen erfolgt. Der PDCM-Modus findet gemäß "Power Function Class" keine Anwendung, da er bei den genannten Aktoren aufgrund geringen Datenaufkommens auch nicht erforderlich ist.

Die DSI3-Spezifikationen legen also mit der "Signal Function Class" und der "Power Function Class" zwei Möglichkeiten des Betriebs der Sensoranordnung fest, die einerseits für den Betrieb von Sensoren mit geringem Energiebedarf und hohen Datenaufkommen und andererseits für den Betrieb von Aktoren mit hohem Energiebedarf und geringem Datenaufkommen gut geeignet sind. Ein gemischter Betrieb von "Signal Function Class"-Satelliteninstanzen und "Power Function Class"-Satelliteninstanzen ist gemäß der genannten Spezifikation möglich, wenn der Bus als "Power Function Class"-Bus betrieben wird und die "Signal Function Class"-Satelliteninstanz derart ausgelegt sind, dass sie die erhöhte Spannung in der genannten Power-Phase schadlos überstehen. Es ist jedoch schwierig, auf Basis dieser beiden Funktionsklassen den Betrieb von aktiven Sensoreinheiten zu ermöglichen, zu denen insbesondere Satelliteninstanzen mit Sensoren zählen, die auf Basis eines aktiv von der Satelliteninstanz erzeugten Signals bzw. dessen Echo die Umgebung eines Fahrzeugs sensieren.

Ein weiterer Nachteil des DSI3-Standards gemäß der genannten Spezifikation ergibt sich im Falle von Sensoranordnungen, deren Sensoren fallweise unterschiedliche Datenmengen erfassen und an die Zentralinstanz weitergeben müssen. Zwar erlaubt es der DSI3-Standard, die zur Datenübermittlung an die Zentralinstanz verfügbare Datenmenge im PDCM-Modus flexibel festzulegen. Um dies jedoch dynamisch im Betrieb zu ermöglichen, muss die Zentralinstanz zunächst im CRM-Modus die Zeitschlitze für die Satelliteninstanzen neu festsetzen. Die hierfür erforderliche Datenmenge ist vergleichsweise groß und muss auf mehrere Befehle der Zentralinstanz verteilt werden, so dass die übertragbare Datenmenge von den Satelliteninstanzen zur Zentralinstanz entsprechend sinkt.

Aus der DE 102012222891 A1 ist die Verwendung eines Fahrassistenzsystems mit DSI-Bus und in diesem Kontext die Nutzung von Ultraschall-Sensoren bekannt. Aus der US2013070863 A1 ist die Verwendung einer Sensoranordnung in einem Kraftfahrzeug auf Basis eines DSI-Protokolls bekannt

### AUFGABE UND LÖSUNG

Aufgabe der Erfindung ist es, ein Verfahren zum Betrieb einer Sensoranordnung in einem Fahrzeug auf Basis eines DSI-Protokolls zur Verfügung zu stellen, welches die Nachteile der unzureichenden Unterstützung aktiver Sensoren und variabler Datenmengen verringert.

Erfindungsgemäß erfolgt dies gemäß einem ersten Aspekt der Erfindung mittels des folgenden Verfahrens, welches in einer Sensoranordnung Anwendung findet, die über mindestens eine Verarbeitungseinheit (als Master / Zentraleinheit) und mindestens eine aktive Sensoreinheit (als Slave / Satelliteneinheit) verfügt, die über einen Bus aus zwei Leitungen miteinander verbunden sind. Die aktive Sensoreinheit kann insbesondere als Ultraschall-Sensoreinheit mit Sender und Empfänger ausgebildet sein.

Gemäß dem Verfahren erfolgt die Kommunikation zwischen der Verarbeitungseinheit und den aktiven Sensoreinheiten oder der mindestens einen aktiven Sensoreinheit mit einer sich wiederholenden Sequenz dreier Phasen, wobei es auf die konkrete Reihenfolge nicht ankommt.

In einer ersten Phase kommunizieren die Verarbeitungseinheit und die aktive Sensoreinheit bidirektional im CRM-Modus. In dieser Phase werden also einfach oder wiederholt Befehle von der Verarbeitungseinheit an eine oder mehrere aktive Sensoreinheiten gesendet, wobei diese Befehle insbesondere dem Zweck dienen, die aktiven Sensoreinheiten mit Parametern eines anstehenden Messzyklus zu versorgen. Hierzu gehört insbesondere der Befehl zum Aussenden eines Signals (Tx-Signal), dessen Echo (Rx-Signal) anschließend sensiert wird.

In einer zweiten Phase erfolgt die Energieversorgung der aktiven Sensoreinheiten. In dieser Phase werden keine Daten übermittelt, sondern es wird bei erhöhter Busspannung jene Energie zu den aktiven Sensoreinheiten übertragen, die diese für den Betrieb und insbesondere für das Aussenden des Signals, dessen Echo anschließend sensiert werden soll, benötigen. Diese Energie wird vorzugsweise teilweise in den aktiven Sensoreinheiten gepuffert, so dass bis zur folgenden Energieversorgungsphase ausreichend Energie zur Verfügung steht.

Im Falle einer Sensoranordnung mit Ultraschallsensoren oder anderweitigen aktiven Sensoren, die nur phasenweise hohe Energie benötigen, ist es von Vorteil, wenn diese Phasen hohen Energiebedarfs sich zumindest teilweise mit der Phase der Energieversorgung überlappen. Im Falle von Ultraschall-Sensoreinheiten oder anderen aktiven Sensoren mit Sender und Empfänger ist es insbesondere von Vorteil, wenn das Aussenden des Ultraschallimpulses oder eines elektromagnetischen Impulses während der Phase der Energieversorgung stattfindet, so dass die hierfür erforderliche Energie nicht zuvor in der aktiven Sensoreinheit gepuffert werden muss.

In einer dritten Phase sendet die aktive Sensoreinheit im PDCM-Modus die Sensordaten an die Verarbeitungseinheit. Hierbei handelt es sich um eine unidirektionale Datenübertragung. Die Verarbeitungseinheit sendet lediglich ein Synchronisierungssignal, das als Referenz dient, damit die aktive Sensoreinheit bzw. die aktiven Sensoreinheiten anschließend in jeweils zuvor festgelegten Zeitschlitzen ihre jeweiligen Daten senden. Dabei kann in dieser Phase je nach Datenmenge auch ein wiederholtes Senden des Synchronisierungssignals durch die Verarbeitungseinheit vorgesehen sein, so dass die aktiven Sensoreinheiten die jeweiligen Daten verteilt auf mehrere Zeitschlitze senden.

Wie eingangs bereits erwähnt, handelt es sich bei diesem Verfahren gemäß dem ersten Aspekt der Erfindung ebenso wie auch beim Verfahren gemäß dem im Weiteren noch erläuterten zweiten Aspekt der Erfindung um ein Verfahren auf Basis des DSI-Standards. Dies bedeutet, dass die genannten Datenübertragungs-Phasen im CRM-Modus und im PDCM-Modus sowie die Energieübertragungs-Phase vorzugsweise entsprechend der genannten DSI-Spezifikation die folgenden Parameter vollständig oder teilweise erfüllen.

Als PDCM-Modus wird demnach ein Datenübermittlungs-Modus angesehen, in dem eine im Wesentlichen unidirektionale Datenübermittlung von der aktiven Sensoreinheit oder den aktiven Sensoreinheiten zur Verarbeitungseinheit stattfindet. Die Sendetätigkeit der aktiven Sensoreinheit richtet sich dabei nach einer zuvor übermittelten Zuordnung von Zeitschlitzen sowie einem Synchronisierungssignal der Verarbeitungseinheit von einem bis drei Bit Länge als Zeitreferenz. In der PDCM-Phase erfolgt der Ablauf, beginnend mit dem Synchronisierungssignal der Verarbeitungseinheit und anschließend mit der Datenübermittlung von den aktiven Sensoreinheiten an die Verarbeitungseinheit üblicherweise mehrfach hintereinander.

Als CRM-Modus wird ein Datenübermittlungs-Modus angesehen, in dem die Verarbeitungseinheit einen meist anhand der Buskennung für eine aktive Sensoreinheit adressierten Befehl oder globalen Befehl auf den Bus sendet und die ggf. hiermit adressierte aktive Sensoreinheit mit einer vom Inhalt des Befehls abhängigen Antwort antwortet. Dabei sind vorzugsweise entsprechend der DSI-Spezifikation sowohl der Befehl als auch die Antwort jeweils 32 Bit lang.

Die Datenübermittlung von der Verarbeitungseinheit auf die aktive Sensoreinheit im CRM-Modus und im PDCM-Modus erfolgt gemäß der DSI-Spezifikation durch Spannungsmodulation der Busspannung. Hierbei werden zur Datenübermittlung zwei Spannungen V_{Low} von 2 V (+/- 0,25 V) und V_{High} von 4 V (+/- 0,5 V) sowie eine Manchesterkodierung benutzt. Es ist vorzugsweise eine Übertragungsgeschwindigkeit von 8 µsec/Bit vorgesehen.

In der Richtung von den aktiven Sensoreinheiten zur Verarbeitungseinheit im CRM-Modus und im PDCM-Modus erfolgt die Datenübermittlung gemäß der DSI-Spezifikation durch Stromstärkenmodulation, wobei die Stromstärke zwischen drei Niveaus wechselt, um statt eines Bits mit zwei möglichen Zuständen drei mögliche Zustände zu ermöglichen. Diese Informationseinheit, die drei Werte annehmen kann, wird als "Chip" bezeichnet. Es ist vorzugsweise eine Übertragungsgeschwindigkeit zwischen 2,7 µsec/Chip und 10 µsec/Chip vorgesehen.

In der Energieübertragungsphase findet eine oberhalb von V_{High} liegende Spannung Verwendung, die in der Spezifikation mit V_{Idle} bezeichnet ist und die gemäß Spezifikation maximal 25 V betragen darf. Vorliegend findet die Energieübertragung vorzugweise mindestens mit einer Spannung von 6 V statt, damit diese von den aktiven Sensoreinheiten von V_{High} zu unterscheiden ist.

Der oben beschriebene erste Aspekt der Erfindung sieht vor, dass abweichend vom DSI-Standard und insbesondere zur Anbindung aktiver Sensoren die Kommunikation zwischen der Verarbeitungseinheit und den aktiven Sensoreinheiten sowohl eine Phase schneller Datenübermittlung (PDCM-Phase) als auch eine Phase der Energieversorgung (Power-Phase) beinhaltet. Es werden hierdurch die beiden Besonderheiten der eingangs genannten "Signal Function Class" und der "Power Function Class" in einem gemeinsamen Betriebsmodus vereinigt.

Hierdurch entfällt die anderenfalls erforderliche Anbindung des aktiven Sensors an eine separate Stromversorgung und es kann eine sehr einfache und kostengünstige Verkabelung verwendet werden.

Trotz der Änderung der Bus-Kommunikation entgegen dem DSI3-Standard bleibt die Kompatibilität vorhanden. Bei Wahl der Betriebsparametern gemäß der Spezifikation ist auch ein gemischter Betrieb mit Geräten möglich, die nur zu Kommunikation gemäß den DSI3-Spezifikationen ("Signal Power Class" oder "Signal Function Class") ausgebildet sind, da diese die Ihnen nicht zugänglichen Buskommunikationsphasen ignorieren.

Das Betriebsverfahrens ist für den Betrieb von aktiven Sensoreinheiten vorgesehen. Unter einer aktiven Sensoreinheit in diesem Sinne wird eine Sensoreinheit verstanden, die einen Sender zum Aussenden eines Signals und einen Empfänger zum Empfangen einer Reflexion dieses Signals, also eines Echo-Signals, umfasst. Insbesondere sind die hier beschriebenen Betriebsverfahren für eine Sensoranordnung mit aktiven Ultraschall-Sensoreinheiten vorgesehen. Diese weisen sowohl einen recht hohen Leistungsbedarf als auch ein hohes Aufkommen an Daten auf.

Das Aussenden des Signals durch eine solche aktive Sensoreinheit erfolgt vorzugsweise während der Power-Phase, in der die Sensoreinheit von der Verarbeitungseinheit mit vergleichsweise hoher Leistung versorgt wird, so dass der Betrieb des Senders unmittelbar aus der über den Bus zugeführten Leistung gespeist werden kann. Dennoch weisen die Sensoreinheiten vorzugsweise einen Energiespeicher, insbesondere in Form eines Kondensators, auf, mittels dessen die in der Power-Phase übertragene Energie bis zur nächsten Power-Phase in der Sensoreinheit gepuffert werden kann.

Ob die Sensoreinheit ein Signal und ggf. weitergehende Parameter zu dem auszusendenden Signal aussenden soll, wird der Sensoreinheit vorzugsweise in der genannten CRM-Phase übermittelt.

Gemäß dem zweiten Aspekt der Erfindung wird ein Verfahren vorgeschlagen, welches in der Praxis vorzugsweise gemeinsam mit dem beschriebenen Verfahren gemäß dem ersten Aspekt der Erfindung realisiert ist, grundsätzlich jedoch auch unabhängig hiervon realisiert sein kann. Das Verfahren findet in einer Sensoranordnung Anwendung, die über mindestens eine Verarbeitungseinheit (Master) und mindestens eine aktive Sensoreinheit (Slave) verfügt, die über einen Bus aus zwei Leitungen miteinander verbunden sind. Besonders zweckmäßig ist dieses Verfahren jedoch bei einem Bus mit einer Mehrzahl von aktiven Sensoreinheiten.

Gemäß diesem Verfahren erfolgt die Kommunikation zwischen der Verarbeitungseinheit und der mindestens einen aktiven Sensoreinheit mit einer sich üblicherweise wiederholenden Sequenz mindestens der beiden folgenden Teilphasen.

In einer ersten Phase kommunizieren die Verarbeitungseinheit und die aktive Sensoreinheit bidirektional im CRM-Modus. In dieser Phase werden einfach oder wiederholt Befehle von der Verarbeitungseinheit an eine oder mehrere aktive Sensoreinheiten gesendet, wobei mittels eines Befehles der Verarbeitungseinheit der aktiven Sensoreinheit eine Freigabe erteilt wird, durch die diese aktive Sensoreinheit zusätzlich zu einem der aktiven Sensoreinheit fest zugeordneten Zeitschlitz einen zusätzlichen ergänzenden Zeitschlitz zugeordnet bekommt. Bei einer Sensoranordnung mit mindestens zwei aktiven Sensoreinheiten wird diese Freigabe einer der beiden aktiven Sensoreinheiten zugeordnet.

In einer anschließenden weiteren Phase im PDCM-Modus senden die aktiven Sensoreinheiten jeweils Sensordaten im Wesentlichen unidirektional an die Verarbeitungseinheit. Hierbei sendet jene aktive Sensoreinheit, der zuvor in der CRM-Phase die Freigabe für einen ergänzenden Zeitschlitz erteilt worden ist, sowohl in dem ihr fest zugeordneten Zeitschlitz als auch in dem ihr zugeordneten ergänzenden Zeitschlitz Daten an die Verarbeitungseinheit.

Die Zeitschlitze, die für die Übermittlung von Daten an die Verarbeitungseinheit definiert sind und die charakteristisch für die Datenübermittlung im PDCM-Modus sind, sind bereits zuvor durch die Verarbeitungseinheit festgelegt worden und vorzugsweise im Rahmen einer initialen Phase der Datenübermittlung im CRM-Modus an die aktive Sensoreinheit übermittelt worden. Hierbei definiert die Verarbeitungseinheit mehr Zeitschlitze als aktive Sensoreinheiten am Bus vorgesehen sind, so dass zusätzlich zu den Zeitschlitzen, die fest einer aktiven Sensoreinheit zugeordnet sind, mindestens ein Zeitschlitz verbleibt, der variabel zugeordnet werden kann, also in verschiedenen Messzyklen verschiedenen aktiven Sensoreinheit zuordenbar ist. Dieser mindestens eine variabel zuordenbare Zeitschlitz kann als Zeitschlitz einer virtuellen, nicht real existenten, Sensoreinheit verstanden werden (virtueller Slave).

Wenn im Zuge der CRM-Phase die Freigabe des zusätzlichen Zeitschlitzes erfolgt, wird dieser mindestens eine variabel zuordenbare Zeitschlitz einer der aktiven Sensoreinheiten zugeordnet, insbesondere durch Übermittlung einer Identifikationskennung dieses Zeitschlitzes bzw. der virtuellen Sensoreinheit, der dieser Zeitschlitz zugeordnet ist. Die betreffende aktive Sensoreinheit kann auf Basis dessen anhand der schon zuvor vorliegenden Daten über die Zeitschlitze ermitteln, in welchem zusätzlichen Zeitschlitz sie nun zum Senden berechtigt ist.

Im einfachsten Falle definiert die Verarbeitungseinheit nur eine virtuelle Sensoreinheit mitsamt einem Zeitschlitz, der dann variabel einer der realen aktiven Sensoreinheit zugeordnet werden kann. Es ist jedoch auch denkbar, dass mehrere virtuelle Sensoreinheiten definiert werden, die dann jeweils einen variabel zuordenbaren Zeitschlitz aufweisen, so dass mehreren realen aktiven Sensoreinheiten für die gleiche PDCM-Phase jeweils ein zusätzlicher Zeitschlitz zugeordnet werden kann oder einer realen aktiven Sensoreinheit für eine PDCM-Phase mehrere zusätzliche Zeitschlitze zugeordnet werden können. Die Zeitschlitze müssen gemäß Spezifikation keine einheitliche Länge haben. Es ist also beispielsweise auch denkbar, die Zeitschlitze der realen aktiven Sensoreinheit und der virtuellen Slaves unterschiedlich lang auszugestalten, wenn die spezifische Gestaltung der aktiven Sensoreinheit regelmäßig dazu führt, dass entweder sehr wenig Daten oder sehr viele Daten anfallen.

Eine alternative Möglichkeit zur erfindungsgemäßen Definition zusätzlicher und variabel zuordenbarer Zeitschlitze und zur fallweisen Freigabe derer läge darin, stattdessen dynamisch die Größe der Zeitschlitze zu verändern. Dies jedoch würde dazu führen, dass eine erheblich größere Datenmenge von der Verarbeitungseinheit auf die aktive Sensoreinheit übertragen werden müsste, um alle aktiven Sensoreinheiten wiederholt über die geänderte Anordnung der Zeitschlitze zu informieren.

Die Zuordnung des mindestens einen variabel zuzuordnenden Zeitschlitzes zu einer realen aktiven Sensoreinheit erfolgt durch die Verarbeitungseinheit vorzugsweise in Abhängigkeit der Parameter des jeweiligen Messzyklus, insbesondere in Abhängigkeit davon, welche aktive Sensoreinheit einen Befehl zum Senden eines Signals erhält. Je nach Konfiguration des Sensornetzwerkes ergibt sich hieraus, an welchen Sensoren ein Echo solcher Signale zu erwarten ist. So ist beispielsweise an einem Empfänger einer Sensoreinheit das Eintreffen zweier Echo-Signale zu erwarten, wenn die Sender zweier links und rechts neben dieser Sensoreinheit angeordneter benachbarter Sensoreinheiten den Befehl zum Aussenden eines Signals erhalten.

Die Anordnung der Zeitschlitze der virtuellen Sensoreinheiten, also der variabel und dynamisch einer realen aktiven Sensoreinheit zuordenbaren Zeitschlitze, sieht vorzugsweise vor, dass diese in der Reihenfolge der Zeitschlitze am Ende angeordnet sind, also hinter den fest den realen aktiven Sensoreinheiten zugeordneten Zeitschlitzen. Dies gestattet es, die variabel zuzuordnenden Zeitschlitze nicht in jedem Messzyklus zu verwenden, sondern fallweise auf deren Nutzung zu verzichten. Die Verarbeitungseinheit kann dann nach der Datenübermittlung auf dem letzten fest zugeordneten Zeitschlitz bereits in den CRM-Modus zurückkehren, ohne dass der variabel zuordenbare Zeitschlitz abgewartet werden muss.

Die Erfindung betrifft neben den beschriebenen Betriebsverfahren auch eine Sensoranordnung, insbesondere eine Ultraschall-Sensoranordnung für ein Kraftfahrzeug, die mindestens eine Verarbeitungseinheit und mindestens eine aktive Sensoreinheit aufweist, die über einen Bus mit zwei Leitungen miteinander verbunden sind. Die mindestens eine aktive Sensoreinheit bzw. die vorzugsweise mehreren aktiven Sensoreinheiten sind jeweils für die Erfassung die Erzeugung eines elektromagnetischen Signals oder eines Ultraschallsignals sowie für die Erfassung eines entsprechenden Echo-Signals ausgebildet.

Diese Sensoranordnung bzw. die Verarbeitungseinheit und die mindestens eine aktive Sensoreinheit, sind für den Betrieb gemäß mindestens einem der vorstehenden Verfahren ausgebildet.

Alle im DSI3-Standard vorgesehenen Bus-Topologien, also "Point-to-Point", "Daisy Chain" und "Parallele Bus-Topologie" können hierbei Verwendung finden.

Von der Erfindung umfasst sind weiterhin noch ein entsprechend ausgebildetes Fahrerassistenzsystem sowie ein Kraftfahrzeug mit einem solchen Fahrerassistenzsystem.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt ein Kraftfahrzeug, an dem eine erfindungsgemäße Sensoranordnung vorgesehen ist.
Fig. 2 zeigt die Buskommunikation auf dem Bussystem der Sensoranordnung gemäß Fig. 1
Fig. 3A bis 3C zeigen die Funktionsweise der Sensoranordnung in einer ersten Fahrsituation.
Fig. 4A bis 4C zeigen die Funktionsweise der Sensoranordnung in einer zweiten Fahrsituation.
Fig. 5A bis 5C zeigen die Funktionsweise der Sensoranordnung in einer dritten Fahrsituation.

### DETAILLIERTE BESCHREIBUNG DER AUSFÜHRUNGSBEISPIELE

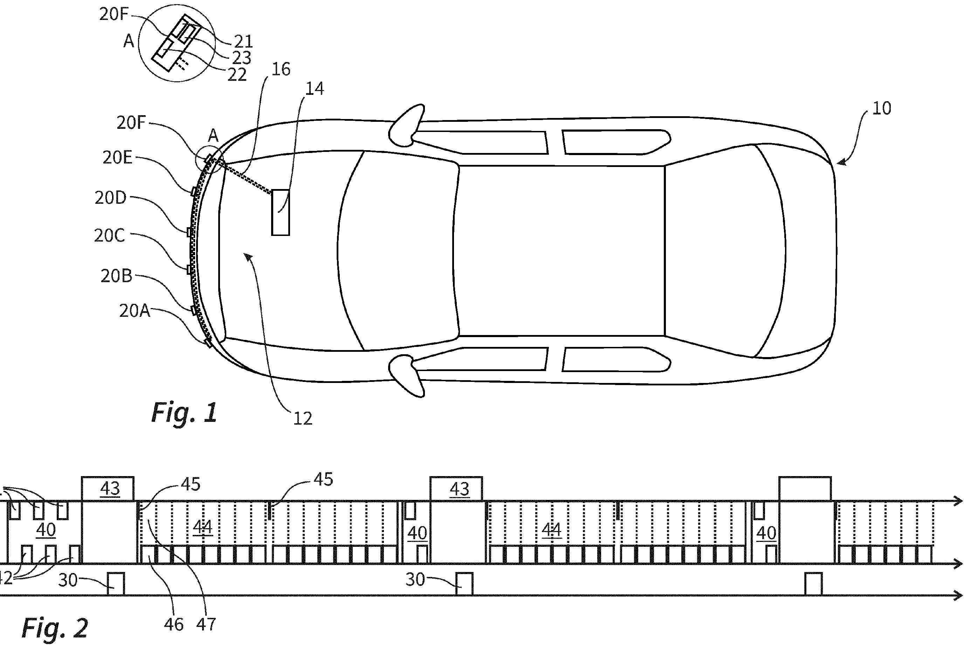

Fig. 1 zeigt in schematisierter Ansicht ein Kraftfahrzeug 10, welches über ein erfindungsgemäßes Fahrerassistenzsystem verfügt. Teil dieses Fahrerassistenzsystems ist eine erfindungsgemäße Sensoranordnung 12, welche vorliegend rein exemplarisch als Sensoranordnung mit Sensoreinheiten an der vorderen Stoßstange des Kraftfahrzeugs 10 ausgebildet ist.

Bei der Sensoranordnung 12 handelt es sich um eine Sensoranordnung 12 mit aktiven Sensoreinheiten 20A - 20F, also mit Sensoreinheiten, die jeweils einen Sender 21 und einen Empfänger 22 in sich vereinen, wie anhand des vergrößerten Sensors 20F in Fig. 1 erkennbar ist. Die Reflexion eines durch den Sender 21 abgestrahlten Signals kann daher durch den Empfänger 22 der gleichen Sensoreinheit oder auch einer anderen Sensoreinheit empfangen werden, um aus der Reflexion Rückschlüsse über die Umgebung des Fahrzeugs zu ziehen. Insbesondere kann es sich um Sensoreinheiten 20A - 20F handeln, die mit einem Ultraschallsender 21 und einem Ultraschallempfänger 22 ausgestattet sind.

Die Sensoranordnung 12 umfasst ein Steuergerät (ECU) 14 als Zentralinstanz der Sensoranordnung. In dieser sind ein Steuergerät und der Busmaster im Sinne der DSI3-Spezifikation enthalten. Dieses Steuergerät 14 ist über einen Zweidraht-Bus 16 mit den insgesamt sechs Sensoreinheiten 20A - 20F (Slaves) verbunden. Diese Sensoreinheiten 20A - 20F sind entweder parallel geschaltet oder in einer so genannten Daisy-Chain-Anordnung am Bus 16 angeschlossen. Die Möglichkeiten der Verbindung ergeben sich aus der DSI3-Spezifikation zum "Distributed System Interface". Durch den sehr einfachen Bus mit nur zwei Leitungen ist der für die Verkabelung erforderliche Aufwand sehr gering.

Der Bus 16 wird auf besondere, nachfolgend beschriebene Art betrieben, um trotz der nur zwei Leitungen sowohl die Energieversorgung der Sensoreinheiten als auch eine schnelle und flexible Datenübertragung zu gewährleisten.

Fig. 2 zeigt einen Ausschnitt der Kommunikation, der die Inbetriebnahme des Busses und insgesamt zwei sogenannte Messzyklen umfasst. Die X-Achse im Diagramm der Fig. 2 stellt die Zeit dar.

Ein Messzyklus umfasst dabei jeweils die Befehlskommunikation von vom Steuergerät 14 an die betroffenen Sensoreinheiten 20A - 20F in Hinblick auf die auszusendenden Signale, die Energieversorgung der Sensoreinheiten 20A - 20F und die Rücklieferung von Daten von den Sensoreinheiten 20A - 20F an das Steuergerät.

Die hierfür erforderliche Kommunikation umfasst je Messzyklus drei unterschiedliche Phasen, die im Weiteren beschrieben sind.

Innerhalb eines jeden Messzyklus ist die erste Phase 40 die so genannte CRM-Phase (Command and Response). In dieser Phase 40 kommuniziert das Steuergerät bidirektional mit den Sensoreinheiten und sendet dabei insbesondere Befehle 41, durch die die Sensoreinheiten 20A - 20F darüber in Kenntnis gesetzt werden, welche der Sensoreinheiten im betreffenden Messzyklus ein Ultraschall-Signal auszusenden hat. Die Sensoreinheiten 20A-20F senden in dieser CRM-Phase soweit erforderlich Antworten 42.

In der sich daran anschließenden zweiten Phase 43 findet über den Bus 16 die Energieversorgung der Sensoreinheiten 20A - 20F statt, insbesondere jener Sensoreinheiten, die in der ersten Phase 40 den Befehl zum Aussenden des Ultraschall-Signals erhalten haben. Diese elektrische Energie wird innerhalb eines Energiespeichers 23 der Sensoreinheiten 20A - 20F zwischengespeichert, insbesondere in einem hierfür vorgesehenen Kondensator 23.

Noch während die Energieübertragung über den Bus 16 erfolgt, senden die betroffenen Sensoreinheiten 20A - 20F mittels ihres jeweiligen Senders 21 und gespeist vom Kondensator 23 oder gespeist unmittelbar über den Bus 16 das in Fig. 2 vermerkte Ultraschall-Signal 30 aus und empfangen je nach Fahrzeugumgebung dessen Echo-Signal, also die Reflexion des ausgesendeten Signals, und gegebenenfalls auch Echo-Signale von Sendern der anderen Sensoreinheiten.

Es folgt als dritte und letzte Phase 44 des Messzyklus die Übermittlung der Daten dieses Echo-Signals an das Steuergerät 14. Diese unidirektionale Übermittlung erfolgt im PDCM-Modus (Periodic Data Collection Mode). Für diese PDCM-Phase 44 ist charakteristisch, dass nicht wie im CRM-Modus das Steuergerät über den Bus Befehle sendet, auf die die jeweils angesprochene Sensoreinheit dann reagiert. Stattdessen sendet das Steuergerät 14 nur ein Synchronisierungssignal 45. Dieses wird von allen Sensoreinheiten empfangen und als Referenzzeitpunkt genutzt.

Jede Sensoreinheit 20A - 20F weist zur eindeutigen Adressierung im CRM-Modus eine Buskennung auf. Vorliegend verfügen die sechs Sensoreinheiten 20A - 20F exemplarisch über die Buskennungen "1" (20A) bis "6" (20F).

Ausgehend von dem durch das Synchronisierungssignal 45 gesetzten Referenzzeitpunkt ermitteln die Sensoreinheiten 20A - 20F dann die Zeitschlitze 47, die ihrer jeweiligen Buskennung zugeordnet sind und in denen sie anschließend gemäß PDCM-Modus ihre Datenblöcke 46 zur Übertragung an das Steuergerät 14 auf den Bus 16 schreiben, so dass sie vom Steuergerätt 14 zur Weiterverarbeitung gelesen werden können.

Die genannten Zeitschlitze 47, in denen die Sensoreinheiten 20A - 20F jeweils exklusiv senden, sind ihnen zuvor in Form einer Art Zeitschlitztabelle und im Rahmen der ersten initialen CRM-Phase 40 als Zeitintervalle, berechnet vom Synchronisierungssignal 45, übermittelt worden. Jeder Buskennung "1" bis "6" ist ein solcher Zeitschlitz 47 zugeordnet. Die Übermittlung der genannten Zeitschlitztabelle erfolgt vorzugsweise bei Inbetriebnahme der Sensoranordnung 12. Dies ist auch der Grund, warum die erste CRM-Phase 40 in Fig. 2 länger als die darauf folgenden CRM-Phasen 40 dargestellt ist. Alternativ kann die Zeitschlitztabelle in den Sensoreinheiten 20A - 20F auch persistent hinterlegt sein.

Wie sich anhand der Figur 2 ersehen lässt, beträgt die Anzahl der Datenblöcke 46 und der hierfür vorgesehenen Zeitschlitze nach dem Synchronisierungssignal 45 acht, obwohl nur sechs Sensoreinheiten mit den Buskennungen "1" bis "6" real vorgesehen sind. Grund hierfür ist, dass das Steuergerät 14 in der initialen CRM-Phase 40 nicht nur diesen sechs realen Sensoreinheiten 20A - 20F einen Zeitschlitz zuordnet, sondern auch zwei virtuellen Slaves, die die Buskennungen "7" und "8" erhalten. Es werden also zwei Zeitschlitze definiert, die keiner der Sensoreinheiten 20A - 20F fest zugeordnet sind, sondern variabel zugeordnet werden können, wie im Weiteren noch erläutert ist. Auch die Position dieser zusätzlichen Zeitschlitze relativ zum Synchronisierungssignal 45 werden an die Sensoreinheiten 20A - 20F übertragen oder sind in diesen persistent hinterlegt. Diese Zeitschlitze sind in der Chronologie der PDCM-Phase 44 ganz als letzte angeordnet.

In der CRM-Phase 40 übermittelt das Steuergerät 14 an die Sensoreinheiten 20A - 20F nicht nur, welche der Sensoreinheiten 20A - 20F für das Aussenden des Ultraschall-Signals 30 vorgesehen ist oder sind, sondern auch, welcher Sensoreinheit 20A - 20F zusätzlich zu ihrem fest vorgegebenen Zeitschlitz ein zusätzlicher Zeitschlitz von den beiden Zeitschlitzen 47 der virtuellen Slaves mit den Buskennungen "7" und "8" zugeordnet ist. Auch ist es möglich, dass die zusätzlich, variabel zuordenbaren Zeitschlitze keiner der Sensoreinheiten zugeordnet werden, so dass jeder Sensoreinheit 20A - 20F jeweils nur ihr fest zugeordneter Zeitschlitz zur Verfügung steht.

Ob das Steuergerät 14 die variabel zuordenbaren Zeitschlitze 47 einer Sensoreinheit zuordnet, hängt von der Fahrsituation und den in Abhängigkeit der Fahrsituation gegebenen Sensordatenbedarf ab. Dies wird nachfolgend anhand von drei Beispielen erläutert.

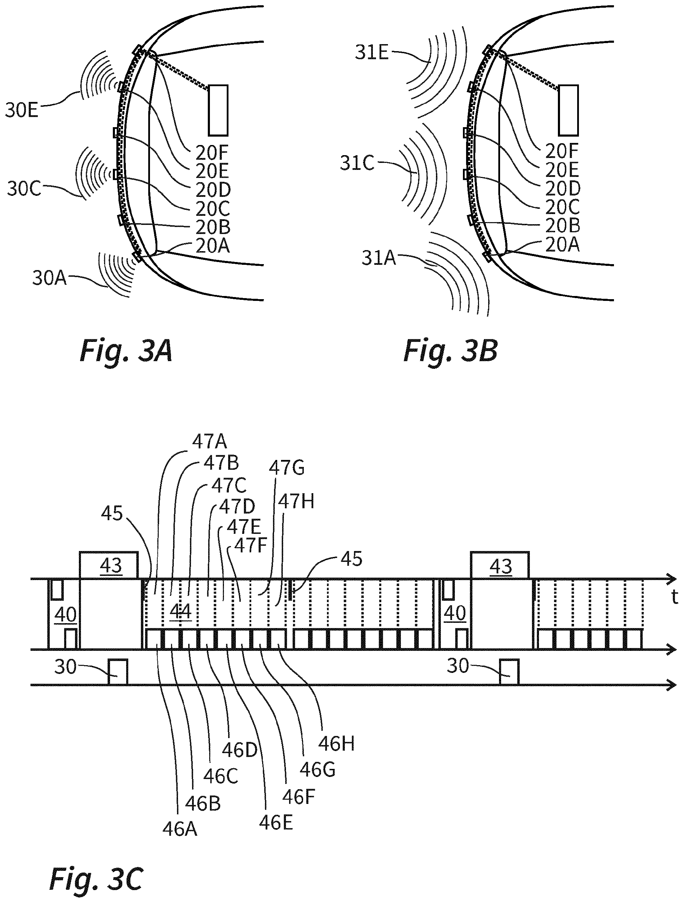

Das Beispiel der Fig. 3A bis 3C zeigt eine Situation, die sich beispielsweise beim Einparken des Fahrzeugs ergeben kann. In dieser Situation ist es erforderlich, so genau wie möglich die Umgebung zu erkennen, um Kollisionen zu vermeiden.

Wie Fig. 3A zeigt, ist hierfür vorgesehen, dass drei der sechs Sensoreinheiten, nämlich vorliegend die Sensoreinheiten 20A, 20C und 20E, ein Signal aussenden sollen. Bezugnehmend auf Fig. 3C wird den betreffenden Sensoreinheiten ein dahingehender Befehl in der CRM-Phase 40 übermittelt. Weiterhin kann diesen Sensoreinheiten 20A, 20C, 20E in dieser Phase 40 auch mitgeteilt werden, wie das auszusendende Signal zu individualisieren ist, beispielsweise über eine Festlegung einer besonderen Sendefrequenz, so dass die Echo-Signale später unterscheidbar sind. Alternativ kann aber auch vorgesehen sein, dass die Sensoreinheiten 20A - 20F beim Aussenden des Signals dieses stets über einen von ihrer Buskennung abhängigen Parameter individualisieren, beispielsweise indem die Buskennung in das auszusendende Signal kodiert wird.

Ebenfalls in der CRM-Phase 40 übermitteln das Steuergerät 14 and die Sensoreinheiten 20B, 20D die Buskennung jeweils eines der beiden oben beschriebenen virtuellen Slaves, vorliegend also exemplarisch die "7" und die "8". Durch die dahingehenden Befehle erfahren die beiden Sensoreinheiten 20B, 20D, dass sie für die Datenübermittlung an das Steuergerät 14 in der nachfolgenden PDCM-Phase jeweils zwei Zeitschlitze zur Verfügung haben, nämlich den fest vorgegebenen ihren Buskennungen ("2" bzw. "4") zugeordneten und einen variabel zugeordneten ("7" oder "8").

Nach Abschluss der CRM-Phase 40 erhöht das Steuergerät in der schon beschriebenen Art und Weise die Busspannung auf einen Wert jenseits der höchsten bei der Datenübermittlung üblichen Spannung und leitet damit die Power-Phase 43 ein. Die Sensoreinheiten laden hiermit jeweils ihre Kondensatoren 23 auf und die ausgewählten Sensoreinheiten 20A, 20C, 20E senden dann jeweils ihr Ultraschallsignal 30A, 30C, 30E aus.

In Fig. 3B ist zu erkennen, welche reflektierten Echo-Signale 31A, 31C, 31E von nicht dargestellten Reflexionsflächen in der Umgebung des Fahrzeugs zurückgeworden werden. Wie sich anhand Figur ersehen lässt, treffen diese Echo-Signale 31A, 31C, 31E nicht nur die aussendenden Sensoreinheiten 20A, 20C, 20E, sondern auch die drei anderen Sensoreinheiten 20B, 20D, 20E. Zwei dieser Sensoreinheiten, nämlich die Sensoreinheiten 20B und 20D, sensieren dabei aufgrund ihrer Anordnung jeweils zwei Echo-Signale.

Durch das erste Synchronisierungssignal 45 leitet das Steuergerät 14 die Datenübermittlung von den Sensoreinheiten 20A bis 20E an das Steuergerät 14 ein. Zunächst senden alle sechs Sensoreinheiten 20A - 20F in ihrem fest zugeordneten Zeitschlitz 47A - 47F die erfassten Daten eines ersten Echo-Signals an das Steuergerät . Sobald dies geschehen ist, senden die beiden Sensoreinheiten 20B, 20D in den ihnen für diesen Messzyklus zusätzlich zugeordneten Zeitschlitzen 47G, 47H die erfassten Daten des zweiten Echo-Signals, welche durch sie erfasst wurden.

Beim vorliegenden Beispiel reichen die Zeitschlitze jedoch jeweils nicht, um die erfassten Daten eines Echo-Signals vollständig an das Steuergerät zu übermitteln, so dass das Steuergerät ein zweites Synchronisierungssignal 45 sendet, welches nochmals jeder Sensoreinheit 20A - 20F die Gelegenheit gibt, die verbliebenen Daten in ihrem jeweiligen Zeitschlitz 47A - 47F zu senden. Auch bei diesem zweiten Zyklus innerhalb der PDCM-Phase 44 senden die Sensoreinheiten 20B, 20D wiederum zusätzlich in dem ihnen für diesen Messzyklus zusätzlich zugeordneten Zeitschlitz 47G, 47H.

Der aufgrund der doppelten Datenmenge größere erforderliche Übertragungsbedarf von den Sensoreinheiten 20B, 20D wird also über die zusätzlichen Zeitschlitze 47G, 47H gedeckt. Trotz des Konzeptes der Zeitschlitze führt der höhere Übertragungsbedarf nur zu einer gering erhöhten Übertragungszeit.

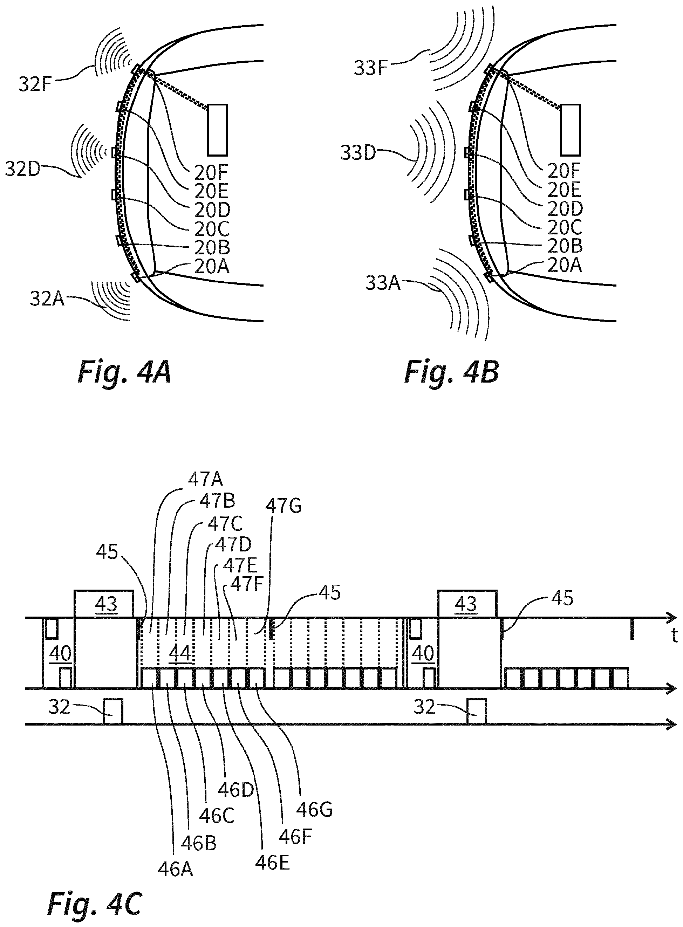

Das zweite Beispiel der Fig. 4A bis 4C stellt eine Fahrsituation dar, wie sie sich im Stadtverkehr einstellen kann.

Um in besonderem Maße die im Falle von Rechtsverkehr auf der rechten Seite parkenden Fahrzeuge oder von rechts kommenden Fahrzeuge im Blick zu behalten, ist hier vorgesehen, dass es die Sensoreinheiten 20D und 20F sind, die Ultraschallsignale aussenden sollen. Zusätzlich soll auch die Sensoreinheit 20A ein Ultraschallsignal aussenden, mittels dessen der Gegenverkehr beobachtet werden kann.

In der CRM-Phase 40 ergehen daher Befehle vom Steuergerät 14 an diese Sensoreinheiten 20A, 20D, 20F, dass sie Signale auszusenden haben, ggf. ergänzt um Parameter für das auszusendende Signal, damit diese voneinander unterscheidbar bleiben. Ebenfalls in der CRM-Phase 40 wird ein Befehl an den Sensor 20E gesendet, mittels dessen diesem Sensor der Zeitschlitz 47G eines der beiden virtuellen Slaves zugeordnet wird, in diesem Fall des virtuellen Slaves mit der Buskennung "7".

Der virtuelle Slave mit der Buskennung "8" und sein Zeitschlitz 47H werden in diesem zweiten Beispiel keiner der Sensoreinheiten zugeordnet.

Ähnlich dem ersten Beispiel senden nun die ausgewählten Sensoreinheiten 20B, 20D, 20F in der Power-Phase 43 ihr jeweiliges Ultraschallsignal 32B, 32D, 32F, wie in Fig. 4A verdeutlicht ist. Diese Ultraschallsignale werden wiederum an Reflexionsflächen reflektiert und erreichen als Echo-Signale 33B, 33D, 33F die Sensoreinheiten.

In diesem zweiten Beispiel ist es jedoch nur die Sensoreinheit 20E, die aufgrund der Anordnung zwischen den sendenden Sensoreinheiten 20D, 20F zwei Echo-Signale empfängt, nämlich die Echo-Signale 33D, 33F.

Ähnlich dem ersten Beispiel erfolgt anschließend in der PDCM-Phase die durch das Synchronisierungssignal 45 das Steuergerät 14 ausgelöste Übermittlung von Daten von den Sensoreinheiten 20A bis 20F an das Steuergerät 14. Wiederum senden alle Sensoreinheit 20A - 20F zunächst in ihren fest zugeordneten Zeitschlitzen 47A - 47F. Anschließend nutzt die Sensoreinheit 20E den Zeitschlitz 47G, der der Buskennung "7" zugeordnet ist, um ihre gegenüber den anderen Sensoreinheiten größere Datenmenge an das Steuergerät 14 zu übersenden.

Die Besonderheit in diesem zweiten Beispiel ist nun, dass der Zeitschlitz 47H, der der Buskennung "8" zugeordnet ist und der keiner der Sensoreinheiten 20A bis 20F zugeordnet wurde, nicht abgewartet werden muss. Nach Eingang der Daten des Zeitschlitzes 47F mit der Buskennung "7" sendet das Steuergerät 14 unmittelbar das zweite Synchronisierungssignal 45, da sie weiß, dass sie die Buskennung "8" vergeben hat und daher keine Daten mehr zu erwarten sind.

Ergebnis dessen ist, dass die Datenübermittlung schneller vonstattengeht. Trotz der Tatsache, dass insgesamt acht Zeitschlitze 47A - 47H für die Buskennungen "1" bis "8" definiert wurden und bei Bedarf zur Verfügung stehen, sind die Messzyklen in diesem zweiten Beispiel nur so lang, wie es bei sieben Zeitschlitzen der Fall wäre, da das Steuergerät 14 den Zeitschlitz 47H der Buskennung "8" nicht abwarten muss, sondern direkt fortfahren kann.

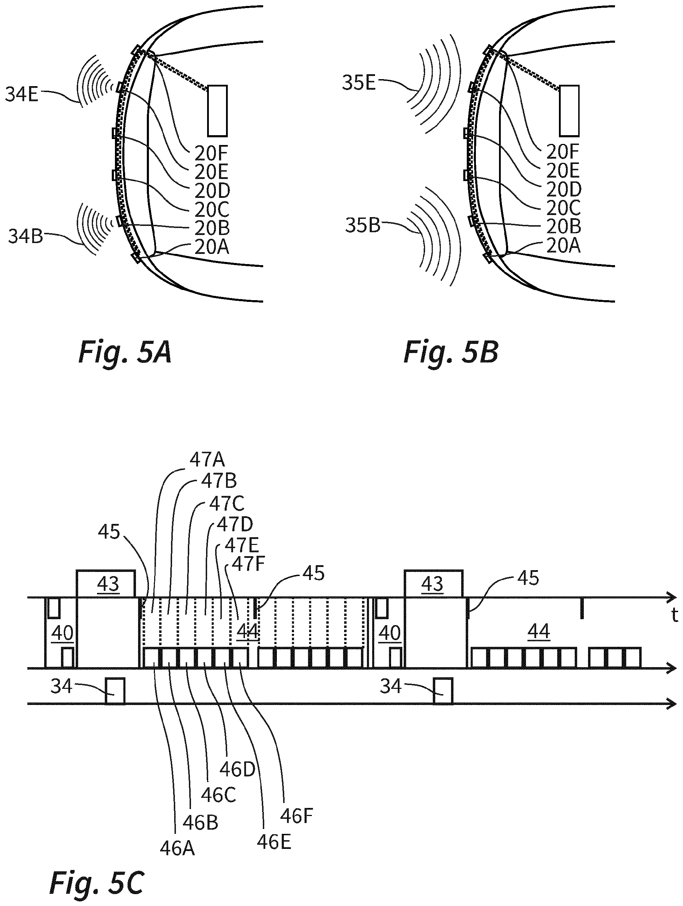

Ähnliches verdeutlicht auch das letzte Beispiel der Fig. 5A bis 5C. Hier handelt es sich um eine Fahrsituation, wie sie beispielsweise auf der Autobahn gegeben ist.

In der CRM-Phase 40 des Messzyklus ergeht in dieser Situation der Befehl an die beiden Sensoreinheiten 20B, 20F, demzufolge diese Sensoreinheiten ein Ultraschallsignal 34B, 34F auszusenden haben. Eine Zuordnung der Zeitschlitze der Buskennungen "7" und "8" erfolgt dagegen hier nicht.

Sofern das von den genannten Sensoreinheiten 20B, 20F ausgesendete Signal reflektiert wird, gelangt es als Echosignal 35B, 35F zurück zu den Sensoreinheiten, wobei die Sensoreinheiten 20A bis 20C das Echosignal 36B erfassen und die Sensoreinheiten 20D bis 20F das Echosignal 36F erfassen.

Nach Einleitung der PDCM-Phase 44 durch Senden des ersten Synchronisierungssignals 45 ist die Datenübermittlung durch die Sensoreinheiten 20A bis 20F eingeleitet. Alle Sensoreinheiten 20A - 20F übermitteln in ihrem jeweiligen Zeitschlitz 47A - 47F die erfassten Daten. Sobald der letzte dieser sechs Zeitschlitze 47A - 47F abgeschlossen ist, sendet das Steuergerät 14 das zweite Synchronisierungssignal 45, um in den jeweils zweiten Zeitschlitzen 47A - 47F die verbliebenen Daten übermittelt zu bekommen. Anschließend geht das Steuergerät 14 wieder in den CRM-Modus über und leitet damit den nächsten Messzyklus ein.

Wie auch beim zweiten Beispiel führen die insgesamt acht Zeitschlitze 47A bis 47H also auch in diesem dritten Beispiel nicht zu einer Verlängerung des Messzyklus, soweit dies nicht durch die Datenmenge geboten ist. Das dritte Beispiel verdeutlicht darüber hinaus, dass der Messzyklus dann, wenn keine erhöhte Datenmenge vorliegt, gegenüber einer Konzeption der Sensoranordnung vollständig ohne virtuelle Slaves nicht verlängert ist

Die Verkürzung der Messzyklen gemäß dem zweiten und dem dritten Beispiel hat vor allem den Vorteil einer höheren Messfrequenz. Während in der Parksituation des ersten Beispiels aufgrund der hier üblicherweise gegebenen geringen Geschwindigkeiten eine geringere Messfrequenz verschmerzbar ist, ist es in der Stadtverkehrssituation des Beispiels 2 sowie der Autobahnsituation des Beispiels 3 und aufgrund der hier herrschenden höheren Geschwindigkeiten sehr von Vorteil, dass hier Messzyklen verkürzt und die Messfrequenz erhöht ist

## Patentansprüche

1. Verfahren zum Betrieb einer Sensoranordnung (12) in einem Kraftfahrzeug auf Basis eines DSI-Protokolls mit den folgenden Merkmalen:
a. die Sensoranordnung (12) verfügt über mindestens eine Verarbeitungseinheit (14) und mindestens eine aktive Sensoreinheit (20A-20F) mit einem Sender (21) zum Aussenden eines Signals (30, 32, 34) und einem Empfänger (22) zum Empfangen eines Echo-Signals (31, 33, 35), die über einen Bus (16) aus zwei Leitungen miteinander verbunden sind, und
b. die Kommunikation zwischen der Verarbeitungseinheit (14) und der aktiven Sensoreinheit (20A-20F) erfolgt wiederholt in einer Sequenz mit den folgenden Teilphasen:
o in einer CRM-Phase, Command and Response Mode, (40) findet eine bidirektionale Kommunikation zwischen der Verarbeitungseinheit (14) und der aktiven Sensoreinheit (20A-20F) statt,
o in einer Power-Phase (43) findet eine Energieübertragung von der Verarbeitungseinheit (14) auf die aktive Sensoreinheit (20A-20F) statt, und
o in einer PDCM-Phase, Periodic Data Collection Mode, (44) findet nach einem von der Verarbeitungseinheit gesendeten Synchronisierungssignal (45) eine unidirektionale Datenübertragung von der aktiven Sensoreinheit (20A-20F) zur Verarbeitungseinheit (14) statt.

2. Verfahren nach Anspruch 1 mit dem folgenden zusätzlichen Merkmal: die mindestens eine aktive Sensoreinheit (20A-20F) ist als Ultraschallsensoreinheit (20A-20F) mit einem Ultraschallsender (21) und einem Ultraschallempfänger (22) ausgebildet.

3. Verfahren nach Anspruch 2 mit folgenden zusätzlichen Merkmal: der Sender (21) sendet während der Power-Phase (43) das Signal (30, 32, 34) aus, dessen Echo-Signal (31, 33, 35) anschließend von dem Empfänger (22) erfasst wird.

4. Verfahren nach einem der Ansprüche 1 bis 3 mit dem folgenden zusätzlichen Merkmal: die aktive Sensoreinheit (20A-20F) verfügt über einen Energie-Speicher (23) zur Speicherung elektrischer Energie, welcher während der Power-Phase (43) geladen wird.

5. Verfahren nach einem der vorstehenden Ansprüche mit dem folgenden zusätzlichen Merkmal: in der CRM-Phase (40) werden Daten von der Verarbeitungseinheit (14) an die aktive Sensoreinheit (20A-20F) gesendet, die Parameter für das Senden des Signals (30, 32, 34) umfassen und/oder die Parameter für das Empfangen des Echo-Signals (31, 33, 35) mittels des Empfängers (22) umfassen.

6. Verfahren zum Betrieb einer Sensoranordnung (12) in einem Kraftfahrzeug auf Basis eines DSI-Protokolls mit den folgenden Merkmalen:
a. die Sensoranordnung (12) verfügt über mindestens eine Verarbeitungseinheit (14) und mindestens zwei aktive Sensoreinheiten (20A-20F) mit einem Sender (21) zum Aussenden eines Signals (30, 32, 34) und einem Empfänger (22) zum Empfangen eines Echo-Signals (31, 33, 35), die über einen Bus (16) aus zwei Leitungen miteinander verbunden sind, und
b. die Kommunikation zwischen der Verarbeitungseinheit (14) und den aktiven Sensoreinheiten (20A-20F) erfolgt in einer Sequenz mit den folgenden Teilphasen:
o∘ in einer CRM-Phase, Command and Response Mode, (40) findet eine bidirektionale Kommunikation zwischen der Verarbeitungseinheit (14) und den aktiven Sensoreinheiten (20A-20F) statt, im Rahmen derer die Verarbeitungseinheit (14) einer der aktiven Sensoreinheiten (20A-20F) durch Freigabe einen variablen ergänzenden Zeitschlitz (47G, 47H) zusätzlich zu einem der aktiven Sensoreinheiten fest zugeordneten Zeitschlitz (47A-47F) zuordnet, und
∘ in einer PDCM-Phase, Periodic Data Collection Mode, (44) findet nach einem von der Verarbeitungseinheit (14) gesendeten Synchronisierungssignal (45) eine unidirektionale Datenübertragung in unterschiedlichen Zeitschlitzen (45A-47H) von den mindestens zwei aktiven Sensoreinheiten (20A-20F) an die Verarbeitungseinheit (14) statt, wobei jene aktive Sensoreinheit (20A-20F), der zuvor in der CRM-Phase (40) die Freigabe für einen ergänzenden Zeitschlitz (47G, 47H) erteilt worden ist, sowohl in dem ihr fest zugeordneten Zeitschlitz (47A-47F) als auch in dem ihr zugeordneten ergänzenden Zeitschlitz (47G, 47H) Daten an die Verarbeitungseinheit sendet.

7. Verfahren nach Anspruch 6 mit dem folgenden zusätzlichen Merkmal: die aktiven Sensoreinheiten (20A-20F) sind als Ultraschallsensoreinheiten (20A-20F) mit einem Ultraschallsender (21) und einem Ultraschallempfänger (22) ausgebildet, und in der CRM-Phase (40) wird mindestens zwei der aktiven Sensoreinheiten (20A-20F) ein Befehl zum Senden jeweils eines Signals (30, 32, 34) erteilt, und die Zuordnung des ergänzenden Zeitschlitzes (47G, 47H) zu einer der mindestens zwei aktiven Sensoreinheiten (20A-20F) erfolgt in Abhängigkeit davon, welche der aktiven Sensoreinheiten (20A-20F) aufgrund der Anordnung der aktiven Sensoreinheiten (20A-20F) voraussichtlich Echo-Signale (31, 33, 35) der mindestens zwei gesendeten Signale (30, 32, 34) empfangen wird.

8. Verfahren nach einem der Ansprüche 6 oder 7 mit dem folgenden zusätzlichen Merkmal: bei einer Inbetriebnahme der Sensoranordnung (12) sendet die Verarbeitungseinheit (14) eine Information an die aktiven Sensoreinheiten (20A-20F) über die zeitliche Relativposition der fest zugeordneten Zeitschlitze (47A-47F) einer jeden aktiven Sensoreinheiten (20A-20F) und des mindestens einen variablen ergänzenden Zeitschlitzes (47G, 47H).

9. Verfahren nach einem der Ansprüche 6 bis 8 mit dem folgenden zusätzlichen Merkmal: den Zeitschlitzen (47A-47H) sind zeitliche Relativpositionen in einer Reihenfolge zugeordnet, der zufolge die fest zugeordneten Zeitschlitze (47A-47F) zeitlich vor den variabel zuordenbaren ergänzenden Zeitschlitzen (47G, 47H) angeordnet sind.

10. Verfahren nach einem der Ansprüche 6 bis 9 mit dem folgenden zusätzlichen Merkmal: die Zuordnung des zusätzlichen Zeitschlitzes (47G, 47H) an eine der aktiven Sensoreinheiten (20A-20F) erfolgt durch Übermittlung einer nicht an eine reale aktiven Sensoreinheiten (20A-20F) vergebene Identifikationskennung.

11. Verfahren nach einem der vorstehenden Ansprüche mit mindestens einem der folgenden zusätzlichen Merkmale: in der PDCM-Phase (44) sendet die Verarbeitungseinheit (14) einfach oder wiederholt ein Synchronisierungssignal (45), welches von der mindestens einen aktiven Sensoreinheiten (20A-20F) empfangen wird, wobei die aktiven Sensoreinheiten (20A-20F) anschließend auf Basis einer bereits zuvor in der aktiven Sensoreinheiten (20A-20F) hinterlegten oder von der Verarbeitungseinheit übermittelten Information über die zeitliche Relativposition von Zeitschlitzen (47A-47H) einer jeden aktiven Sensoreinheiten (20A-20F) mit der Datenübermittlung an die Verarbeitungseinheit (14) beginnt und/oder in der CRM-Phase (40) sendet die Verarbeitungseinheit (14) an eine der aktiven Sensoreinheiten (20A-20F) adressierte Befehle (41) von 32 Bit Länge, wobei vorzugsweise dann die adressierte aktive Sensoreinheit (20A-20F) eine Antwort (42) von 32 Bit Länge sendet und/oder die Datenübermittlung von der Verarbeitungseinheit (14) an die aktiven Sensoreinheiten (20A-20F) erfolgt spannungsmoduliert, wobei vorzugsweise eine Manchesterkodierung und/oder zwei Spannungsniveaus V_{Low} von 2 V [+/- 0,25 V] und von V_{High} 4 V [+/- 0,5 V] Verwendung finden und/oder die Datenübermittlung von einer aktiven Sensoreinheiten (20A-20F) an die Verarbeitungseinheit (14) erfolgt stromstärkenmoduliert, wobei vorzugsweise die Daten in Stromstärken dreier diskreter und voneinander vorzugsweise gleich beabstandeter Niveaus kodiert sind, und/oder in der Power-Phase (43) erhöht die Verarbeitungseinheit (14) die am Bus (16) anliegende Spannung V_{Idle} auf mindestens 6V.

12. Sensoranordnung (12), insbesondere Ultraschall-Sensoranordnung (12) für ein Kraftfahrzeug (10), mit den folgenden Merkmalen:
a. die Sensoranordnung (12) verfügt über mindestens eine Zentralinstanz (14) und mindestens eine aktive Sensoreinheit (20A-20F), die über einen Bus (16) aus zwei Leitungen miteinander verbunden sind, und
b. jede aktive Sensoreinheit (20A-20F) beinhaltet vorzugweise einen Ultraschallsender (21) und einen Ultraschallempfänger (22), und
c. die Sensoranordnung (12) ist zum Betrieb gemäß einem der Verfahren der vorstehenden Ansprüche ausgebildet.

13. Fahrerassistenzsystem für ein Fahrzeug mit dem folgenden Merkmal: das Fahrerassistenzsystem verfügt über eine Sensoranordnung (12) nach Anspruch 12.

14. Fahrzeug (10) mit dem folgenden Merkmal: das Fahrzeug (10) verfügt über ein Fahrerassistenzsystem nach Anspruch 13, wobei vorzugsweise die Sensoranordnung (12) als Ultraschall-Sensoranordnung (12) im Bereich einer Stoßstange des Fahrzeugs (10) ausgebildet ist.

## Claims

1. Method for operating a sensor arrangement (12) in a motor vehicle on the basis of a DSI protocol, having the following features:
a. the sensor arrangement (12) comprises at least one processing unit (14) and at least one active sensor unit (20A - 20F) having a transmitter (21) for transmitting a signal (30, 32, 34) and a receiver (22) for receiving an echo signal (31, 33, 35), said transmitter and receiver being connected to one another via a bus (16) of two lines, and
b. the communication between the processing unit (14) and the active sensor unit (20A - 20F) occurs repeatedly in a sequence having the following part phases:
∘ in a CRM phase "Command and Response Mode" (40), bidirectional communication takes place between the processing unit (14) and the active sensor unit (20A - 20F),
∘ in a power phase (43), a transmission of energy from the processing unit (14) to the active sensor unit (20A - 20F) takes place, and
∘ in a PDCM phase "Periodic Data Collection Mode" (44), after a synchronizing signal (45) that is transmitted from the processing unit, a unidirectional transmission of data takes place from the active sensor unit (20A - 20F) to the processing unit (14).

2. Method according to Claim 1, having the following additional feature: the at least one active sensor unit (20A - 20F) is embodied as an ultrasonic sensor unit (20A - 20F) having an ultrasonic transmitter (21) and an ultrasonic receiver (22).

3. Method according to Claim 2, having the following additional feature: the transmitter (21) transmits the signal (30, 32, 34) during the power phase (43) and the echo signal (31, 33, 35) of said signal is subsequently ascertained by the receiver (22).

4. Method according to any one of Claims 1 to 3, having the following additional feature: the active sensor unit (20A - 20F) comprises an energy storage device (23) for storing electrical energy, said energy storage device being charged during the power phase (43) .

5. Method according to any one of the preceding claims, having the following additional feature: in the CRM phase (40), data is transmitted from the processing unit (14) to the active sensor unit (20A - 20F), said data comprising parameters for transmitting the signal (30, 32, 34) and/or parameters for receiving the echo signal (31, 33, 35) by means of the receiver (22).

6. Method for operating a sensor arrangement (12) in a motor vehicle on the basis of a DSI protocol, having the following features:
a. the sensor arrangement (12) comprises at least one processing unit (14) and at least two active sensor units (20A - 20F) having a transmitter (21) for transmitting a signal (30, 32, 34) and a receiver (22) for receiving an echo signal (31, 33, 35), said transmitter and receiver being connected to one another via a bus (16) of two lines, and
b. the communication between the processing unit (14) and the active sensor units (20A - 20F) occurs repeatedly in a sequence having the following part phases:
∘ in a CRM phase "Command and Response Mode" (40), bidirectional communication takes place between the processing unit (14) and the active sensor units (20A - 20F), during which, in addition to a time slot (47A - 47F) that is fixedly allocated to one of the active sensor units, the processing unit (14) allocates a variable supplementary time slot (47G, 47H) to one of the active sensor units (20A - 20F) by means of a releasing procedure, and
∘ in a PDCM phase "Periodic Data Collection Mode" (44), after a synchronizing signal (45) that is transmitted from the processing unit (14), a unidirectional transmission of data takes place from the at least two active sensor units (20A - 20F) to the processing unit (14) in different time slots (45A - 47H), wherein any active sensor unit (20A - 20F) that previously in the CRM phase (40) has been granted the release for a supplementary time slot (47G, 47H) transmits data to the processing unit both in the time slot (47A - 47F) that is fixedly allocated to said sensor unit as well as in the supplementary time slot (47G, 47H) that is allocated to said sensor unit.

7. Method according to Claim 6 having the following additional feature: the active sensor units (20A - 20F) are embodied as ultrasonic sensor units (20A - 20F) having an ultrasonic transmitter (21) and an ultrasonic receiver (22), and in the CRM phase (40) at least two of the active sensor units (20A - 20F) are granted a command to transmit respectively a signal (30, 32, 34), and the supplementary time slot (47G, 47H) is allocated to one of the at least two active sensor units (20A - 20F) in dependence upon which one of the active sensor units (20A - 20F) is predicted owing to the arrangement of the active sensor units (20A - 20F) to receive echo signals (31, 33, 35) of the at least two signals (30, 32, 34) that are transmitted.

8. Method according to any one of Claims 6 or 7 having the following additional feature: as the sensor arrangement (12) is brought into operation, the processing unit (14) transmits information to the active sensor units (20A - 20F) regarding the chronological relative position of the fixedly allocated time slots (47A - 47F) of one of any active sensor units (20A - 20F) and the at least one variable supplementary time slot (47G, 47H).

9. Method according to any one of Claims 6 to 8 having the following additional feature: the time slots (47A - 47H) are allocated chronological relative positions in a sequence, said relative positions being arranged according to the fixedly allocated time slots (47A - 47F) chronologically prior to the supplementary time slots (47G, 47H) that may be variably allocated.

10. Method according to any one of Claims 6 to 9 having the following additional feature: the additional time slot (47G, 47H) is allocated to one of the active sensor units (20A - 20F) by means of transmitting an identification that is not assigned to a real active sensor unit (20A - 20F).

11. Method according to any one of the preceding claims having at least one of the following additional features: in the PDCM phase (44) the processing unit (14) simply or repeatedly transmits a synchronizing signal (45), which is received by the at least one active sensor unit (20A - 20F), wherein the active sensor units (20A - 20F) subsequently start to transmit data to the processing unit (14) on the basis of information that is stored beforehand in the active sensor units (20A - 20F) or information that is transmitted from the processing unit regarding the relative position of time slots (47A - 47H) of one of any active sensor units (20A - 20F) and/or in the CRM phase (40) the processing unit (14) transmits addressed commands (41) of 32 bit length to one of the active sensor units (20A - 20F), wherein the addressed active sensor unit (20A - 20F) preferably then transmits a response (42) of 32 bit length and/or the transmission of data from the processing unit (14) to the active sensor units (20A - 20F) is then performed in a voltage modulated manner, wherein Manchester coding and/or two voltage levels V_{Low} of 2 V (+/- 0.25V) and .V_{High} of 4 V (+/- 0.5V) are preferably used and/or the transmission of data from an active sensor unit (20A - 20F) to the processing unit (14) is then performed in a voltage modulated manner, wherein the data is preferably coded in current strengths of three discreet levels that are preferably identically spaced from one another, and/or in the power phase (43) the processing unit (14) increases the voltage V_{Idle} that is prevailing at the bus (16) to at least 6V.

12. Sensor arrangement (12), in particular ultrasonic sensor arrangement (12), for a motor vehicle (10), having the following features:
a. the sensor arrangement (12) comprises at least one central instance (14) and at least one active sensor unit (20A - 20F) that are connected to one another via a bus (16) of two lines, and
b. each active sensor unit (20A - 20F) preferably includes an ultrasonic transmitter (21) and an ultrasonic receiver (22), and
c. the sensor arrangement (12) is embodied so as to operate in accordance with one of the methods of the preceding claims.

13. Driver assist system for a vehicle having the following feature: the driver assist system comprises a sensor arrangement (12) according to Claim 12.

14. Vehicle (10) having the following feature: the vehicle (10) comprises a driver assist system according to Claim 13, wherein the sensor arrangement (12) is preferably embodied as an ultrasonic sensor arrangement (12) in the region of a bumper of the vehicle (10).

## Revendications

1. Procédé permettant de faire fonctionner un agencement de capteurs (12) dans un véhicule automobile sur la base d'un protocole DSI, ayant les particularités suivantes :
a. l'agencement de capteurs (12) dispose d'au moins une unité de traitement (14) et d'au moins une unité de capteur active (20A-20F) dotée d'un émetteur (21) pour émettre un signal (30, 32, 34) et d'un récepteur (22) pour recevoir un signal d'écho (31, 33, 35) qui sont reliés l'un à l'autre par un bus (16) composé de deux lignes, et
b. la communication entre l'unité de traitement (14) et l'unité de capteur active (20A-20F) est effectuée à plusieurs reprises dans une séquence ayant les phases partielles suivantes :
∘ dans une phase de CRM, « Command and Response Mode », (40), une communication bidirectionnelle a lieu entre l'unité de traitement (14) et l'unité de capteur active (20A-20F),
∘ dans une phase de puissance (43), un transfert d'énergie de l'unité de traitement (14) à l'unité de capteur active (20A-20F) a lieu, et
∘ dans une phase de PDCM, « Periodic Data Collection Mode », (44), après un signal de synchronisation (45) envoyé par l'unité de traitement, une transmission de données unidirectionnelle de l'unité de capteur active (20A-20F) à l'unité de traitement (14) a lieu.

2. Procédé selon la revendication 1, ayant la particularité supplémentaire suivante : ladite au moins une unité de capteur active (20A-20F) est réalisée sous la forme d'une unité de capteur à ultrasons (20A-20F) dotée d'un émetteur à ultrasons (21) et d'un récepteur à ultrasons (22).

3. Procédé selon la revendication 2, ayant la particularité supplémentaire suivante : pendant la phase de puissance (43), l'émetteur (21) émet le signal (30, 32, 34) dont le signal d'écho (31, 33, 35) est ensuite capté par le récepteur (22).

4. Procédé selon l'une quelconque des revendications 1 à 3, ayant la particularité supplémentaire suivante : l'unité de capteur active (20A-20F) dispose d'un accumulateur d'énergie (23) pour accumuler de l'énergie électrique et qui est chargé pendant la phase de puissance (43).

5. Procédé selon l'une quelconque des revendications précédentes, ayant la particularité supplémentaire suivante : dans la phase de CRM (40), des données sont envoyées de l'unité de traitement (14) à l'unité de capteur active (20A-20F) qui comprennent des paramètres pour l'envoi du signal (30, 32, 34) et/ou qui comprennent des paramètres pour la réception du signal d'écho (31, 33, 35) au moyen du récepteur (22).

6. Procédé permettant de faire fonctionner un agencement de capteurs (12) dans un véhicule automobile sur la base d'un protocole DSI, ayant les particularités suivantes :
a. l'agencement de capteurs (12) dispose d'au moins une unité de traitement (14) et d'au moins deux unités de capteur actives (20A-20F) dotées d'un émetteur (21) pour émettre un signal (30, 32, 34) et d'un récepteur (22) pour recevoir un signal d'écho (31, 33, 35) qui sont reliés l'un à l'autre par un bus (16) composé de deux lignes, et
b. la communication entre l'unité de traitement (14) et les unités de capteur actives (20A-20F) a lieu dans une séquence comprenant les phases partielles suivantes :
∘ dans une phase de CRM, « Command and Response Mode », (40), une communication bidirectionnelle a lieu entre l'unité de traitement (14) et les unités de capteur actives (20A-20F) dans le cadre de laquelle l'unité de traitement (14) d'une des unités de capteur actives (20A-20F) associe par libération une tranche de temps complémentaire variable (47G, 47H) en plus d'une tranche de temps (47A-47F) associée de manière fixe aux unités de capteur actives, et
∘ dans une phase de PDCM, « Periodic Data Collection Mode », (44), après un signal de synchronisation (45) envoyé par l'unité de traitement (14), une transmission de données unidirectionnelle dans différentes tranches de temps (45A-47H) des au moins deux unités de capteur actives (20A-20F) à l'unité de traitement (14) a lieu, ladite unité de capteur active (20A-20F) à laquelle la libération pour une tranche de temps complémentaire (47G, 47H) a été accordée précédemment dans la phase de CRM (40) envoyant des données à l'unité de traitement à la fois dans la tranche de temps (47A-47F) qui lui est associée de manière fixe et dans la tranche de temps complémentaire (47G, 47H) qui lui est associée.

7. Procédé selon la revendication 6, ayant la particularité supplémentaire suivante : les unités de capteur actives (20A-20F) sont réalisées sous la forme d'unités de capteur à ultrasons (20A-20F) dotées d'un émetteur à ultrasons (21) et d'un récepteur à ultrasons (22), et dans la phase de CRM (40), un ordre d'envoyer respectivement un signal (30, 32, 34) est donné à au moins deux des unités de capteur actives (20A-20F), et l'association de la tranche de temps complémentaire (47G, 47H) à l'une des au moins deux unités de capteur actives (20A-20F) a lieu en fonction de celle des unités de capteur actives (20A-20F) qui recevra probablement des signaux d'écho (31, 33, 35) des au moins deux signaux envoyés (30, 32, 34) en raison de l'agencement des unités de capteur actives (20A-20F).

8. Procédé selon l'une quelconque des revendications 6 et 7, ayant la particularité supplémentaire suivante : lors de la mise en service de l'agencement de capteurs (12), l'unité de traitement (14) envoie une information aux unités de capteur actives (20A-20F) concernant la position relative temporelle des tranches de temps (47A-47F) associées de manière fixe de chaque unité de capteur active (20A-20F) et de ladite au moins une tranche de temps complémentaire (47G, 47H) variable.

9. Procédé selon l'une quelconque des revendications 6 à 8, ayant la particularité supplémentaire suivante : des positions relatives sont associées aux tranches de temps (47A-47H) dans un ordre selon lequel les tranches de temps (47A-47F) associées de manière fixe sont disposées temporellement avant les tranches de temps complémentaires (47G, 47H) pouvant être associées de manière variable.

10. Procédé selon l'une quelconque des revendications 6 à 9, ayant la particularité supplémentaire suivante : l'association de la tranche de temps supplémentaire (47G, 47H) à l'une des unités de capteur actives (20A-20F) a lieu par la transmission d'un identifiant non attribué à une unité de capteur active réelle (20A-20F) .

11. Procédé selon l'une quelconque des revendications précédentes, ayant au moins l'une des particularités supplémentaires suivantes : dans la phase de PDCM (44), l'unité de traitement (14) envoie une ou plusieurs fois un signal de synchronisation (45) qui est reçu par ladite au moins une unité de capteur active (20A-20F), dans lequel les unités de capteur actives (20A-20F), sur la base d'une information déjà stockée dans les unités de capteur actives (20A-20F) ou transmise par l'unité de traitement concernant la position relative temporelle des tranches de temps (47A-47H) de chaque unité de capteur active (20A-20F), commencent ensuite la transmission de données à l'unité de traitement (14), et/ou dans la phase de CRM (40), l'unité de traitement (14) envoie des ordres (41) d'une longueur de 32 bits, adressés à l'une des unités de capteur actives (20A-20F), dans lequel de préférence l'unité de capteur active (20A-20F) adressée envoie ensuite une réponse (42) d'une longueur de 32 bits et/ou la transmission de données de l'unité de traitement (14) aux unités de capteur actives (20A-20F) a lieu par modulation en tension, dans lequel de préférence un codage Manchester et/ou deux niveaux de tension V_{Low} de 2 V [+/-0,25 V] et V_{High} de 4 V [+/-0,5 V] sont utilisés et/ou la transmission de données a lieu d'une unité de capteur active (20A-20F) à l'unité de traitement (14), par modulation en intensité de courant, dans lequel de préférence les données sont codées en intensités de courant de trois niveaux discrets et de préférence à distance égales les uns des autres, et/ou dans la phase de puissance (43) l'unité de traitement (14) augmente la tension V_{Idle} appliquée au bus (16) à au moins 6 V.

12. Agencement de capteurs (12), en particulier agencement de capteurs à ultrasons (12) pour un véhicule automobile (10), ayant les particularités suivantes :
a. l'agencement de capteurs (12) dispose d'au moins une instance centrale (14) et d'au moins une unité de capteur active (20A-20F) qui sont reliées l'une à l'autre par un bus (16) composé de deux lignes, et
b. chaque unité de capteur active (20A-20F) comprend de préférence un émetteur à ultrasons (21) et un récepteur à ultrasons (22), et
c. l'agencement de capteurs (12) est réalisé pour fonctionner selon l'un des procédés des revendications précédentes.

13. Système d'assistance au conducteur pour un véhicule, ayant la particularité suivante : le système d'assistance au conducteur dispose d'un agencement de capteurs (12) selon la revendication 12.

14. Véhicule (10), ayant la particularité suivante : le véhicule (10) dispose d'un système d'assistance au conducteur selon la revendication 13, dans lequel de préférence l'agencement de capteurs (12) est réalisé comme un agencement de capteurs à ultrasons (12) au niveau d'un pare-chocs du véhicule (10).
